(19) Europäisches Patentamt

European Patent Office

Office européen des brevets

(11) **EP 0 760 474 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **G01N 21/17**

(21) Anmeldenummer: **95113854.4**

(22) Anmeldetag: **04.09.1995**

(54) **Photoakustischer Gassensor und dessen Verwendung**

Photo-acoustic gas sensor and its use

Détecteur de gaz photo acoustique et son utilisation

(84) Benannte Vertragsstaaten:
**AT BE CH DE DK ES FR GB IE IT LI NL PT SE**

(43) Veröffentlichungstag der Anmeldung:
**05.03.1997 Patentblatt 1997/10**

(73) Patentinhaber: **Siemens Building Technologies AG**
**8034 Zürich (CH)**

(72) Erfinder:
• **Forster, Martin, Dr.**
**CH-8645 Jona (CH)**
• **Pleisch, Rolf**
**CH-8604 Hegnau-Volketswil (CH)**
• **Baraket, Maurad, Dr.**
**CH-8712 Stäfa (CH)**

(74) Vertreter: **Berg, Peter, Dipl.-Ing. et al**
**European Patent Attorney,**
**Siemens AG,**
**Postfach 22 16 34**
**80506 München (DE)**

(56) Entgegenhaltungen:
**EP-A- 0 151 474       DE-A- 3 509 532**
**DE-A- 3 817 791**

**Beschreibung**

Die Erfindung betrifft einen photoakustischen Gassensor für die Messung der Konzentration verschiedener Gase, bestehend aus einem zylindrischen Sensorkörper, einer intensitätsmodulierten Lichtquelle, einer Photodiode zur Überwachung der Lichtquelle, einem optischen Bandpassfilter, dessen spektrale Transmission der Absorptionslinie des zu detektierenden Gases entspricht, einer gaspermeablen Membran, einer zylindrischen Messzelle, einem Mikrofon, einer Treiber- und einer Auswerteelektronik. Die Erfindung betrifft weiter eine Verwendung dieses photoakustischen Gassensors.

Solche Gassensoren werden in vielen Bereichen der Forschung und Industrie eingesetzt und dienen dazu, die Konzentration und Art eines vorherrschenden Gases zu bestimmen. Einige Anwendungsbereiche sind zum Beispiel die Prozessüberwachung in Laboratorien, Bioreaktoren oder Brauereien, die Überwachung der maximalen Arbeitsplatzkonzentration (MAK-Werte) industrieller Arbeitsräume und die Messung von $CO_2$ bei Brandlöschungen. Die Funktion dieser Gassensoren beruht auf dem photoakustischen Effekt, bei dem bei Bestrahlung des zu detektierenden Gases durch moduliertes Licht eine akustische Druckwelle verursacht wird, deren Grösse in direktem Verhältnis zur Konzentration des betreffenden Gases steht. Die akustische Druckwelle entsteht, indem das Gas die Lichtstrahlung absorbiert und sich dadurch erwärmt. Es resultiert eine thermische Ausdehnung und eine, gemäss der Modulation der Lichtstrahlung, periodische Druckschwankung. Eine Messung des akustischen Druckes lässt dann auf die Konzentration jenes Gases zurückschliessen. Verschiedene Gase werden durch den Einsatz von Lichtquellen verschiedener Wellenlängen, die den Absorptionslinien der Gase entsprechen, unterschieden. Es werden hierfür Laserquellen oder breitbandige Lichtquellen wie zum Beispiel Glühwendel zusammen mit optischen Bandpassfiltem verwendet.

Die Anwendung des photoakustischen Effekts zum Nachweis von Gasen erlaubt eine Konzentrationsmessung von besonders hoher Empfindlichkeit. Mit einer hohen Messempfindlichkeit ist jedoch stets die Kontrolle von Störsignalen verbunden. Gassensoren dieser Art verlangen diesbezüglich eine sorgfältige Ausführung, die oftmals auch mit hohen Herstellungskosten verbunden ist.

Heute verwendete Gassensoren der eingangs genannten Art sind zum Beispiel aus der EP-A-0 151 474 und (mit Abweichungen) der GB-A-2 190 998 bekannt. Das Gas gelangt entweder durch eine gaspermeable Membran oder über ein Zuleitungsrohr in die Messzelle. Das von der Lichtquelle emittierte intensitätsmodulierte Licht passiert zunächst das optische Bandpassfilter, dessen Spektralband dem Absorptionsband des zu detektierenden Gases entspricht, und beleuchtet sodann das Volumen der Messzelle. Befindet sich eine bestimmte Konzentration des betreffenden Gases in der Messzelle, wird nach dem photoakustischen Effekt eine akustische Druckwelle erzeugt, die vom Mikrofon empfangen und in ein elektrisches Spannungssignal umgesetzt wird. Dieses wird sodann elektronisch ausgewertet, sodass eine Gaskonzentration angezeigt werden kann.

Es können sich in einem solchen Sensorsystem auch Druckwellen ergeben, die nicht durch das Gas verursacht werden und vom gewünschten Messignal schwer zu unterscheiden sind. Eine dieser Störsignalquellen liegt in der gaspermeablen Membran. Die Membran ist bezüglich der Lichtquelle so angeordnet, dass Lichtstrahlen indirekt nach Reflexion an den Messzellenwänden oder auch direkt auf die Membran fallen und diese sich, gleich dem Gas, ebenfalls erwärmt. Die Membran kann davon in Schwingung geraten und eine akustische Welle verursachen. Diese Druckwelle, sowie Druckwellen, die von Vibrationen anderer Teile des Sensors herrühren und deren Frequenz in einem ähnlichen Bereich wie die der Lichtquellenmodulierung liegen, können das Messignal stören und verrauschen. Das Störsignal durch die Membran kann dadurch reduziert werden, indem eine geeignete Strahlführung, zum Beispiel eine Divergierung des Strahles, die Lichtintensität auf der Membran vermindert. Prinzipiell gelangt jedoch noch immer eine Reststrahlung auf die Membran, und es verbleibt, insbesondere bei empfindlichen Messungen, diese Störsignalquelle in bestimmtem Mass.

Die Divergierung des Lichtstrahls und Reduzierung der Lichtintensität vermindert einerseits die Störsignale durch die Membran, erschwert andererseits die Optimierung der Messignalgrösse. Die Grösse des erzeugten akustischen Druckes hängt auch von der Lichtintensität in der Messzelle ab und kann durch eine Bündelung des Lichtstrahls in der Messzelle optimiert werden. Dies wird meist so bewerkstelligt, indem ein Reflektor, zum Beispiel ein Ellipsoidspiegel, bei der Lichtquelle so angeordnet wird, sodass das meiste Licht auf die Messzelle fokussiert wird. Ist aber auch die Membran gegenüber der Lichtquelle angeordnet, fallen Lichtstrahlen direkt und ohne Abschwächung auf die Membran. Eine Verminderung der Störsignale durch die Membran ist also bei heutigen Anordnungen schwer mit einer Optimierung der Messignalgrössen zu vereinbaren.

Es ist bekannt, zum Beispiel aus der CH-A-679 076, dass die Grösse des durch den photoakustischen Effekt bewirkten akustischen Druckes sich proportional zur Absorptionsdichte der Lichtstrahlung und invers proportional zum Volumen der Messzelle verhält. Bei verändertem Volumen der Messzelle verändert sich auch das resultierende Drucksignal. Wird das Volumen verkleinert, resultiert bei gegebener Gaskonzentration ein grösseres Drucksignal, wodurch auch eine erhöhte Auflösung der Konzentrationsmessung ermöglicht ist. Messbereich und Messempfindlichkeit werden also vom Messzellvolumen beeinflusst.

Bei den bisher bekannten Ausführungen von photoakustischen Gassensoren ist das Volumen der Messzelle zum Teil durch die Anordnung der Sensorbestandteile bestimmt. Das heisst, durch die zylindrische Form der Messzelle und die Anordnung von Membran, Lichtquelle und Mikrofon sind die Systemgrösse des Sensors und somit die äusseren Dimensionen des Sensorkörpers durch die Länge und das Volumen der Messzelle bestimmt. Möchte der Hersteller oder Anwender das Volumen der Messzelle ändern, um über einen anderen Messbereich und mit einer anderen Messempfindlichkeit zu messen, wäre dies in den meisten Fällen nur dann möglich, wenn die Systemgrösse des Sensors und die äusseren Dimensionen des Sensorkörpers entsprechend verändert werden. In dieser Hinsicht ist eine Gasdetektion mittels eines Sensors mit hier erwähnter Anordnung und einer gegebenen Messzellgrösse auf einen Messbereich und eine Messempfindlichkeit beschränkt. Der Anwendungsbereich ist dadurch begrenzt und kann nur mit Mehraufwand und Herstellungsmehrkosten erweitert werden.

Durch die vorliegende Erfindung soll nun ein photoakustischer Gassensor der eingangs genannten Art geschaffen werden, der zur Detektion von verschiedenen Gasen und zur Messung der Konzentration in verschiedenen Bereichen geeignet ist.

Diese Aufgabe wird erfindungsgemäss durch die Merkmale des Anspruchs 1 gelöst. Die Längsachse der Messzelle verläuft senkrecht zu der des zylindrischen Sensorkörpers, die gaspermeable Membran ist am oberen Deckel des zylindrischen Sensorkörpers auf einem Lochgitter angeordnet, ferner sind die Lichtquelle, das Mikrofon und die Photodiode am unteren Deckel des zylindrischen Sensorkörpers befestigt, wobei die Lichtquelle bezüglich der gaspermeablen Membran seitlich versetzt angeordnet ist, und ihre Strahlung parallel zur Längsachse der Messzelle verläuft und die gaspermeable Membran von der Strahlung frei bleibt.

Beim erfindungsgemässen Gassensor sind die Bestandteile des Sensors so angeordnet, dass eine Veränderung des Messzellvolumens ohne Veränderung der Systemgrösse des Sensors und der äusseren Dimensionen des Sensorkörpers möglich ist. Unter Verwendung dieser Anordnung genügt ein einziger Typ von Sensorkörper von gegebenen äusseren Dimensionen, um verschiedene Gassensoren mit verschieden grossen Messzellen zu realisieren. Eine variable Messzellgrösse erlaubt die Messung von Gaskonzentrationen über verschiedene Messbereiche und mit verschiedenen Messempfindlichkeiten.

Die Erfindung betrifft weiter eine Verwendung des genannten photoakustischen Gassensors, wie sie in dem Anspruch 1 dargestellt wird. Diese ist dadurch gekennzeichnet, dass für den Gassensor mit einer Messzelle von gewählten Dimensionen Eichwerte bestimmt werden, die in einem EEPROM in der Auswerteelektronik gespeichert und dazu benützt werden, Spannungssignalen Gaskonzentrationen zuzuordnen.

Besondere Ausführungsarten der Erfindung werden in den abhängigen Ansprüchen dargestellt.

Eine erste bevorzugte Ausführungsform des erfindungsgemässen photoakustischen Gassensors, deren Anwendungsbereich auch explosive Gase miteinschliesst, ist dadurch gekennzeichnet, dass die Lichtquelle und die Photodiode durch einen Abschlussdeckel von der Umgebung abgeschirmt und mit einer Gussmasse explosionssicher abgedichtet sind.

Dieser Gassensor verfügt über eine Explosionssicherheit, indem die Lichtquelle und die Photodiode durch eine Gussmasse und einen Abschlussdeckel dicht von der Umgebung abgeschlossen sind. Die Gussmasse dichtet die Lichtquelle und Photodiode insbesondere bei ihren Einschublöchern ab.

Eine zweite bevorzugte Ausführungsform des erfindungsgemässen photoakustischen Gassensors ist dadurch gekennzeichnet, dass der Abschlussdeckel an seiner Innenseite als Reflektor ausgebildet ist, der die Rückstrahlung der Lichtquelle in die Messzelle lenkt, und dass das optische Bandpassfilter mit einem lichtabsorbierenden Klebstoff mit dem Sensorkörper verbunden ist.

Diese bevorzugte Ausführungsform hat den Vorteil, dass die Störsignale ohne Einbussen bei der Grösse des Messignals reduziert werden und die noch vorhandenen Störsignale als Kontrollsignale für die Sensorfunktion ausgewertet werden können.

Eine dritte bevorzugte Ausführungsform des erfindungsgemässen photoakustischen Gassensors ist dadurch gekennzeichnet, dass der Sensorkörper konstante Aussendimensionen aufweist und dass die zylindrische Messzelle in Abhängigkeit von einem gewünschten Messbereich und einer gewünschten Messempfindlichkeit bis maximal auf den Durchmesser des Sensorkörpers verlängerbar ist.

Diese Ausführungsform hat den Vorteil, dass die Herstellung eines Sensors für einen neuen Einsatzbereich einzig eine Änderung der Messzellenlänge verlangt. Alle übrigen Teile des Sensors bleiben unverändert.

Eine Ausführung des erfindungsgemässen Gassensors ist anhand folgender Figuren näher erläutert.

Fig. 1 zeigt eine Ansicht von oben in Perspektive des Gassensors mit Leiterplatte und Elektronik.
Fig. 2 zeigt eine Ansicht des Sensorkörpers des Gassensors von unten in Perspektive. Zur besseren Ansicht ist hier die Leiterplatte nicht gezeigt.
Fig. 3 zeigt einen Schnitt des Gassensors entlang der Messzellenachse und senkrecht zur Membranfläche. Sie zeigt insbesondere die Lichtquelle mit dem Reflektor integriert im Abschlussdeckel und ihre Anordnung bezüglich der Messzelle und gaspermeablen Membran.

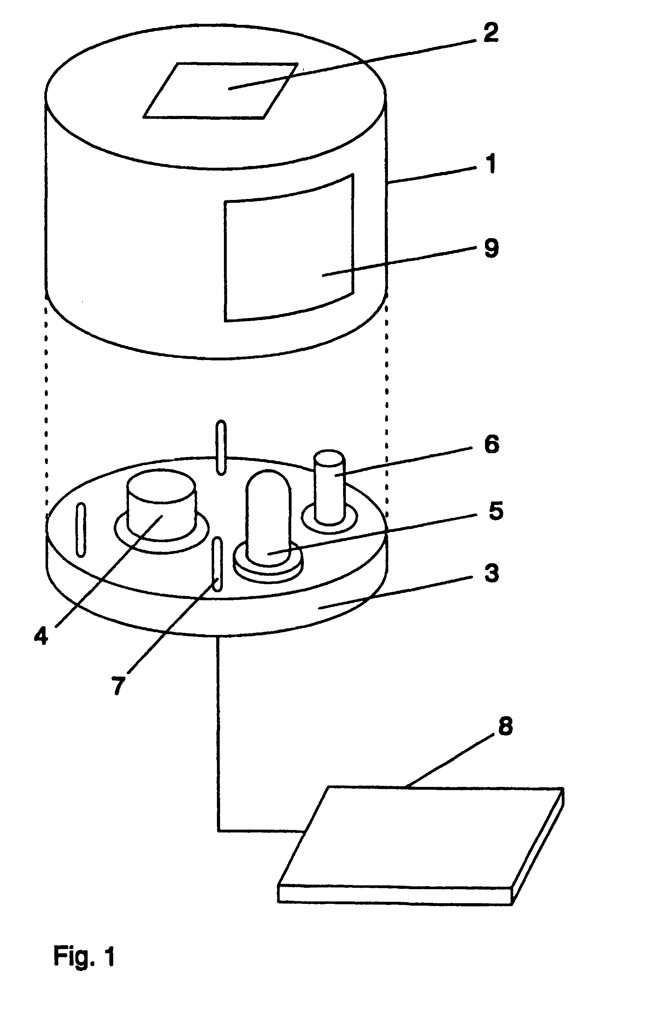

Fig. 1 zeigt den zylindrischen Sensorkörper 1 des Gassensors von oben. Vorzugsweise besteht dieser aus Aluminium; er kann aber auch aus ähnlichem Metall, das gegen die Umwelt beständig ist und nicht korrodiert, gefertigt werden. Auf der oberen Zylinderdeckelfläche ist eine quadratische gaspermeable Membran 2 befestigt. Diese besteht aus einem engmaschigen Material mit Öffnungen in der Grössenordnung von Nanometern. Insbesondere ist diese Membran gasdurchlässig, aber für Wassertröpfchen undurchlässig. Auf der gegenüberliegenden unteren Zylinderdeckelfläche des zylindrischen Sensorkörpers ist eine Leiterplatte 3 befestigt, die hier nach unten versetzt gezeigt ist. Die Leiterplatte 3 enthält ein Mikrofon 4, eine Lichtquelle 5 und eine Photodiode 6. Die Lichtquelle 5 ist hier eine herkömmliche Lampe mit einem Glühwendel. Sie kann aber auch durch eine Laserquelle ersetzt werden. Die Photodiode 6 dient dazu, die Intensität des von dem Glühwendel ausgehenden Lichts zu überwachen. Sie besteht aus einer Siliziumzelle und einem Tageslichtfilter und misst die Lichtintensität im Wellenlängenbereich um 900 nm. Der Glühwendel emittiert Licht über ein breites Spektrum bis in den Infrarotbereich. In den meisten Fällen wird auch eine Spektrallinie im Infrarotbereich für die Gasdetektion verwendet. Man geht jedoch davon aus, dass eine Kontrollmessung der Lichtintensität bei 900 nm eine genügend zuverlässige Messung der Lichtintensität im Infrarotbereich gewährt. Die Leiterplatte 3 enthält ferner Justierstifte 7, die dazu dienen diese bezüglich des Sensorkörpers 1 leichter zu justieren und mit Hilfe von Klebstoff am Sensorkörper zu befestigen. Die Leiterplatte 3 ist mit einer weiteren Leiterplatte verbunden, die eine Treiber- und Auswerteelektronik 8 enthält. Die Treiberelektronik veranlasst die Lampe in einem Arbeitszyklus von 1/3 ein- und auszuschalten, wobei ein Schaltzyklus ungefähr 1/10 Sekunde dauert. Die Erwärmung des Glühwendels beim Einschalten der Lampe ereignet sich typischerweise schneller als deren Abkühlung beim Ausschalten. Der Arbeitszyklus von 1/3 erlaubt, dass der Glühwendel nach dem Ausschalten sich wieder genügend abkühlt. Das Ausgangssignal des Mikrofons wird der Auswerteelektronik zugeleitet, die es mittels eines Lock-in Verstärkers und Gleichrichters in ein dc-Spannungssignal umwandelt. Gemäss gespeicherten Eichwerten wird das Spannungssignal sodann Gaskonzentrationswerten zugeordnet. Auf der Zylindermantelfläche des Sensorkörpers 1 ist der Abschlussdeckel 9 gezeigt, der die Explosionssicherheit des Sensors gewährt

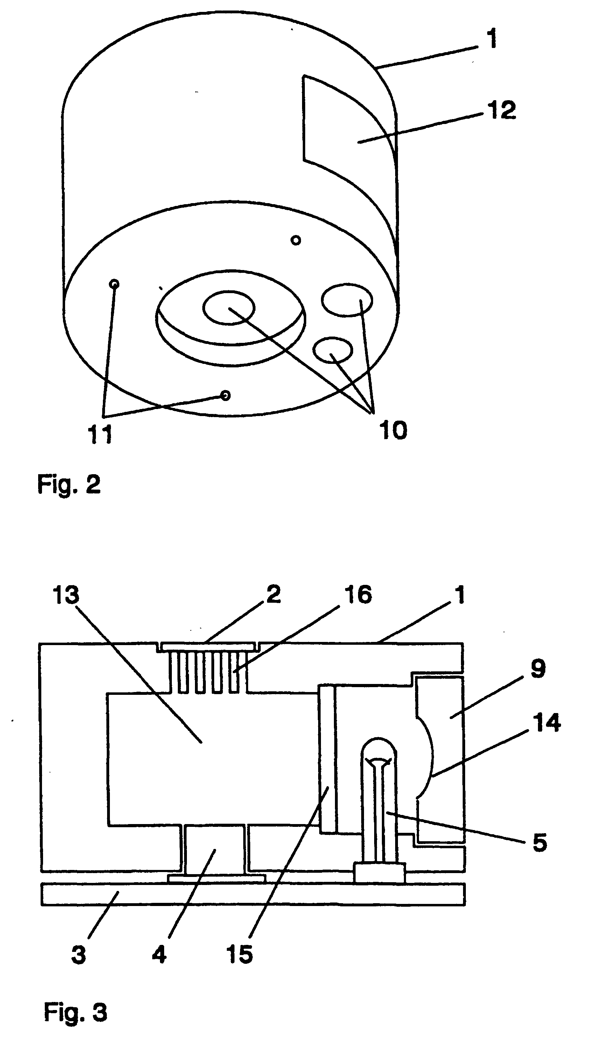

Fig. 2 zeigt den Gassensor von unten. Die untere Seite des Sensorkörpers 1 weist drei Einschublöcher 10 auf für das Mikrofon 4, die Lichtquelle 5 und die Photodiode 6. Sie enthält ferner mehrere schmale Einschublöcher 11 für die Justierstifte 7. Die Zylindermantelfläche des Sensorkörpers 1 weist eine Öffnung 12 für den Abschlussdeckel 9 auf. Die gaspermeable Membran 2 liegt auf der hier nicht ersichtlichen Zylinderdeckelfläche des Sensorkörpers 1.

Fig. 3 zeigt das Innere des Gassensors im Schnitt. Die Lichtquelle 5 ist so angeordnet, dass die Glühwendel auf die Längsachse der zylindrischen Messzelle 13 zu liegen kommt. Hinter der Lichtquelle 5 ist der Abschlussdeckel 9 angebracht, der an seiner Innenseite einen Reflektor 14 enthält. Der Reflektor 14 ist so ausgebildet, dass die Lichtintensität in der Messzelle 13 am höchsten ist. Ein optisches Bandpassfilter 15 ist zwischen der Lichtquelle 5 und der Messzelle 13 befestigt. Es ist, zum Beispiel für den Nachweis von $CO_2$, für die Transmission eines schmalen Spektralbandes um 4.26 µm gefertigt. Je nach Gasart, die detektiert werden soll, ist der Filtertyp entsprechend anzupassen. Das optische Bandpassfilter 15 ist mit einem Klebstoff, der sichtbares Licht absorbiert, an den Sensorkörper 1 befestigt. Die Absorption dieses Lichts verhindert die Beleuchtung der Messzelle mit Licht unerwünschter Wellenlängen. Der Klebstoff bewirkt jedoch zugleich ein Untergrundsignal, indem er sich durch die Absorption erwärmt und ein akustisches Signal verursacht. Dieses Untergrundsignal wird hier zur Funktionskontrolle des Mikrofons 4, der Lichtquelle 5 und der Photodiode 6 verwendet. Verschwindet dieses Untergrundsignal, hat dies zu bedeuten, dass eines oder mehrere dieser drei Komponenten nicht mehr funktionstüchtig ist. Die Auswertung dieses Untergrundsignals zur Überwachung der Komponenten hat den besonderen Vorteil bei der Messung von Gasen, die in der Umgebungsluft nicht als Restgase vorhanden sind. Wird zum Beispiel $CO_2$ gemessen, kann als Untergrundsignal auch das Signal des in der natürlichen Luft vorhandenen $CO_2$'s (ca. 0.04%) ausgewertet werden. Wird hingegen ein anderes, in der natürlichen Luft nicht vorhandenes Gas, wie zum Beispiel Methan, gemessen, kann das Untergrundsignal, das vom Klebstoff herrührt, als Kontrollsignal verwendet werden.

Das Gas gelangt durch die gaspermeable Membran 2 und durch ein grobes Lochgitter 16 in die Messzelle hinein. Das Lochgitter 16 verhindert zudem eine Bestrahlung der Membran 2 durch die Lichtquelle 5. Es können nur sehr wenige Strahlen und nur nach mehreren Reflexionen auf die Membran gelangen, womit die Membran als Störsignalquelle praktisch ausgeschlossen werden kann.

Sollte dieser Gassensor in einem anderen Bereich eingesetzt werden, sei es zur Detektion eines anderen Gases oder desselben Gases in einem anderen Messbereich, kann die Länge der Messzelle bei der Herstellung verschieden lang gefertigt werden. Bei einem Messzellenvolumen herrschen neue Beziehungen zwischen Spannungssignal und zugehöriger Gaskonzentration. Je nach Grösse der Messzelle kann eine Eichkurve gemäss folgender Gleichung bestimmt werden:

$$y(x;l,r) = A(l,r) + B(l,r) \left(l - e^{-C(l)x}\right)$$

wobei

y(x;l,r) das Messignal in Volt,

x die Gaskonzentration in %,

l die Messzellenlänge,

r den Messzellenradius,

A(l,r) das Nullpunktsignal in Volt,

B(l,r) das Signal in Volt für die Maximalkonzentration minus A(l,r) darstellt.

$$C(l) \text{ ist durch } C(l) = \varepsilon \cdot l \text{ gegeben,}$$

wobei $C(l)$ die Dimension $(\%)^{-1}$ trägt, und $\varepsilon$ den prozentualen natürlichen Extinktionkoeffizienten in %/mm darstellt.

A(l,r) und B(l,r) sind Konstanten, die von der Geometrie und den Eigenschaften der Messzelle abhängen. Zu diesen Eigenschaften gehören zum Beispiel die Wirkungen der Seitenwände auf das akustische Signal. Die Konstanten sind durch folgende Gleichungen gegeben:

$$A(l,r) \approx \frac{A(l_0,r_0) \cdot r_0{}^2 l_0 \cdot (r^2 + 2rl)}{r^2 l \cdot (r_0{}^2 + 2r_0 l_0)}$$

$$B(l,r) \approx \frac{B(l_0,r_0) \cdot r_0{}^2 l_0}{r^2 l}$$

Die Werte $l_0$ und $r_0$ sind die Werte der Länge und des Radius einer Zelle, mit der eine Messung der Spannungssignale in Abhängigkeit von bekannten Gaskonzentrationen durchgeführt wird. Sind die Konstanten A und B für die Werte $l=l_0$ und $r=r_0$ bekannt, können sodann die Konstanten für andere Werte von l und r berechnet und Eichkurven der Spannungssignale als Funktion der Gaskonzentration für verschiedene Zellvolumen erstellt werden. Eine Aufzeichnung mehrerer Kurven zeigt, dass bei längeren Messzellen die Kurve bei niedrigen Gaskonzentrationen steil ansteigt, bei den höheren Konzentrationen aber abflacht und nur eine kleine Messauflösung erlaubt. Eine kürzere Messzelle bei gleichem Zellradius ergibt eine Kurve, die im Vergleich noch steiler verläuft und im höheren Konzentrationsbereich viel weniger abflacht. Die kürzere Messzelle ermöglicht also eine höhere Messauflösung über einen grösseren Messbereich während für die Messung kleiner Gaskonzentrationen eine längere Messzelle geeigneter ist. Für die Messung kleiner Konzentrationen ist eine Messzelle mit grösserem Volumen von weiterem Vorteil. Nämlich, bei grossen Messzellen sind die von den Seitenwänden bewirkten Untergrundsignale, entsprechend dem Verhältnis von Volumen zu Seitenwandfläche, geringer als bei kleinen Messzellen.

Anhand dieser Gleichung kann also für eine gegebene Messzelle die Empfindlichkeit bestimmt oder umgekehrt für eine gewünschte Empfindlichkeit die notwendige Messzellenlänge berechnet werden. Bei der Herstellung werden für jeden Gassensor die Konstanten A und B sowie auch C bestimmt und in einem EEPROM gespeichert. Anhand dieser gespeicherten Werte können sodann die Spannungssignale Gaskonzentrationen zugeordnet werden.

Sollte die Messzelle auf eine sehr kurze Länge reduziert werden, muss zusätzlich die Einwirkung des Verhältnisses von Membranfläche zu Zellvolumen in oben erwähnter Gleichung miteinbezogen werden. Wird dieses Verhältnis bei kurzer Zellenlänge sehr gross, verringert sich das resultierende Spannungssignal.

Ein Beispiel der Messempfindlichkeit in Abhängigkeit vom Messzellenvolumen ist im folgenden gegeben. Ein Gassensor der beschriebenen Art mit einer Messzellenlänge von 11 mm und einem Zellenradius von 5 mm zeigt eine $CO_2$-Konzentration von 1% mit einem Spannungssignal von 3 Volt an. Höhere Konzentrationen können mit dieser Zellengrösse schlecht aufgelöst werden. Derselbe Sensor mit verkürzter Zellenlänge von 3 mm zeigt die Konzentration von 1% mit einem Spannungssignal von 6 Volt an, erlaubt aber eine gut aufgelöste Messung der Gaskonzentration von über 5%.

Im folgenden ist ein Beispiel der möglichen Messbereiche, die mit einem Gassensor für den Nachweis von $CO_2$ und von gegebener Sensorkörpergrösse gemessen werden können. Ein Sensorkörper hat einen Durchmesser von 25 mm und eine Messzelle mit einem Radius von 5 mm, der konstant gehalten wird. Die Messzellenlängen können zum Beispiel zwischen 3 mm und 20 mm betragen. Gemäss obiger Gleichung liegt der kleinste Messbereich bei einer Gaskonzentration zwischen 0% und 0.2 % und der grösste Bereich zwischen 0% und 10%.

**Patentansprüche**

1. Photoakustischer Gassensor für die Messung der Konzentration verschiedener Gase bestehend aus einem zylindrischen Sensorkörper (1), einer intensitätsmodulierten Lichtquelle (5), einer Photodiode (6) zur Überwachung der Lichtquelle (5), einem optischen Bandpassfilter (15), dessen spektrale Transmission der Absorptionslinie des zu detektierenden Gases entspricht, einer gaspermeablen Membran (2), einer zylindrischen Messzelle (13), einem Mikrofon (4), einer Treiber- und einer Auswerteelektronik (8), **dadurch gekennzeichnet, dass** die Längsachse der Messzelle (13) senkrecht zu der des zylindrischen Sensorkörpers (1) verläuft, die gaspermeable Membran (2) am oberen Deckel des zylindrischen Sensorkörpers (1) auf einem Lochgitter (16) angeordnet ist, ferner die Lichtquelle (5), das Mikrofon (4) und die Photodiode (6) am unteren Deckel des zylindrischen Sensorkörpers (1) befestigt sind, wobei die Lichtquelle (5) bezüglich der gaspermeablen Membran (2) seitlich versetzt angeordnet ist, und ihre Strahlung parallel zur Längsachse der Messzelle (13) verläuft und die gaspermeable Membran (2) von der Strahlung frei bleibt.

2. Photoakustischer Gassensor nach Anspruch 1, **dadurch gekennzeichnet, dass** die Lichtquelle (5) und die Photodiode (6) durch einen Abschlussdekkel (9) von der Umgebung abgeschirmt und mit einer Gussmasse explosionssicher abgedichtet sind.

3. Photoakustischer Gassensor nach Anspruch 2, **dadurch gekennzeichnet, dass** der Abschlussdekkel (9) an seiner Innenseite als Reflektor (14) ausgebildet ist, der die Rückstrahlung der Lichtquelle (5) in die Messzelle (13) lenkt, und dass das optische Bandpassfilter (15) mit einem lichtabsorbierenden Klebstoff mit dem Sensorkörper (1) verbunden ist.

4. Photoakustischer Gassensor nach einem der Ansprüche 1 bis 3, **dadurch gekennzeichnet, dass** die gaspermeable Membran (2) rechteckig ausgebildet ist.

5. Photoakustischer Gassensor nach einem der Ansprüche 1 bis 4, **dadurch gekennzeichnet, dass** das optische Bandpassfilter (15) rechteckig ausgebildet ist.

6. Photoakustischer Gassensor nach einem der Ansprüche 1 bis 5, **dadurch gekennzeichnet, dass** die Lichtquelle (5), die Photodiode (6) und das Mikrofon (4) auf einer einzigen Leiterplatte (3) montiert sind und die Leiterplatte (3) Justierstifte (7) für deren Justierung und Befestigung an den Sensorkörper (1) aufweist.

7. Photoakustischer Gassensor nach einem der Ansprüche 1 bis 6, **dadurch gekennzeichnet, dass** der Sensorkörper (1) konstante Aussendimensionen aufweist und dass die zylindrische Messzelle (13) in Abhängigkeit von einem gewünschten Messbereich und einer gewünschten Messempfindlichkeit bis maximal auf den Durchmesser des Sensorkörpers (1) verlängerbar ist.

8. Verwendung eines photoakustischen Gassensors nach einem der Ansprüche 1 bis 7, **dadurch gekennzeichnet, dass** für den Gassensor mit einer Messzelle (13) von gewählten Dimensionen Eichwerte bestimmt werden, die in einem EEPROM in der Auswerteelektronik (8) gespeichert und dazu benützt werden, Spannungssignale Gaskonzentrationen zuzuordnen.

9. Verwendung nach dem Anspruch 8 wenn dieser sich auf den Anspruch 3 bezieht, **dadurch gekenn-**

**zeichnet, dass** das Untergrundsignal, das vom lichtabsorbierenden Klebstoff herrührt, als Kontrollsignal für die Funktion des Mikrofons (4), der Lichtquelle (5) und der Photodiode (6) ausgewertet wird.

## Claims

1. A photoacoustic gas sensor for measuring the concentration of various gases, consisting of a cylindrical sensor body (1), an intensity-modulated lightsource (5), a photodiode (6) for monitoring the lightsource (5), an optical bandpass filter (15), the spectral transmission of which corresponds to the absorption line of the gas to be detected, a gas-permeable membrane (2), a cylindrical measuring cell (13), a microphone (4), drive electronics and evaluation electronics (8), **characterised in that** the longitudinal axis of the measuring cell (13) extends perpendicular to that of the cylindrical sensor body (1), the gas-permeable membrane (2) is arranged on the upper cover plate of the cylindrical sensor body (1) on a perforated grating (16), furthermore the light-source (5), the microphone (4) and the photodiode (6) are secured to the lower cover plate of the cylindrical sensor body (1), whereby the lightsource (5) is laterally offset with respect to the gaspermeable membrane (2), its radiation extends parallel to the longitudinal axis of the measuring cell (13), and the gas-permeable membrane (2) remains free from the radiation.

2. Photoacoustic gas sensor according to Claim 1, **characterised in that** the light-source (5) and the photodiode (6) are shielded from the environment by a terminating cover plate (9) and are sealed in explosion-proof manner with a casting compound.

3. Photoacoustic gas sensor according to Claim 2, **characterised in that** the terminating cover plate (9) is designed on its inside as a reflector (14) which directs the reradiation of the light-source (5) into the measuring cell (13), and **in that** the optical bandpass filter (15) is connected to the sensor body (1) with a light-absorbing adhesive.

4. Photoacoustic gas sensor according to one of Claims 1 to 3, **characterised in that** the gas-permeable membrane (2) is of rectangular design.

5. Photoacoustic gas sensor according to one of Claims 1 to 4, **characterised in that** the optical bandpass filter (15) is of rectangular design.

6. Photoacoustic gas sensor according to one of Claims 1 to 5, **characterised in that** the lightsource (5), the photodiode (6) and the microphone (4) are mounted on a single printed circuit board (3) and the printed circuit board (3) exhibits adjusting pins (7) for the adjustment and securing thereof on the sensor body (1).

7. Photoacoustic gas sensor according to one of Claims 1 to 6, **characterised in that** the sensor body (1) exhibits constant external dimensions and **in that** the cylindrical measuring cell (13) is capable of being lengthened, depending on a desired measuring range and a desired measuring sensitivity, up to, maximally, the diameter of the sensor body (1).

8. Use of a photoacoustic gas sensor according to one of Claims 1 to 7, **characterised in that**, for the gas sensor with a measuring cell (13) of chosen dimensions, calibration values are determined which are stored in an EEPROM in the evaluation electronics (8) and are utilised for the purpose of assigning voltage signals to gas concentrations.

9. Use according to Claim 8, if the latter refers to Claim 3, **characterised in that** the background signal that is due to the light-absorbing adhesive is evaluated as a control signal for the operation of the microphone (4), of the light-source (5) and of the photodiode (6).

**Revendications**

1. Détecteur de gaz photo-acoustique pour la mesure de la concentration de divers gaz, constitué d'une pièce (1) cylindrique formant détecteur, d'une source (5) de lumière modulée en intensité, d'une photodiode (6) de contrôle de la source (5) de lumière, d'un filtre (15) optique à bande passante, dont la transmission spectrale correspond à la raie d'absorption du gaz à détecter, d'une membrane (2) perméable aux gaz, d'une cellule (13) cylindrique de mesure, d'un microphone (4), d'une électronique (8) d'attaque et d'une électronique (8) d'exploitation, **caractérisé en ce que** l'axe longitudinal de la cellule (13) de mesure est perpendiculaire à la pièce (1) cylindrique formant détecteur, la membrane (2) perméable aux gaz est placée, sur le couvercle supérieur de la pièce (1) cylindrique formant détecteur, sur un réseau (16) de trous, en outre, la source (5) de lumière, le microphone (4) et la photodiode (6) sont fixés au couvercle intérieur de la pièce (1) cylindrique formant détecteur, la source (5) de lumière étant décalée latéralement par rapport à la membrane (2) perméable aux gaz et son rayonnement s'étendant parallèlement à l'axe longitudinal de la cellule (13) de mesure et la membrane (2) perméable aux gaz reste à l'abri du rayonnement.

2. Détecteur de gaz photo-acoustique suivant la revendication 1, **caractérisé en ce que** la source (5) de lumière et la photodiode (6) sont protégées de l'atmosphère ambiante par un couvercle (9) de fermeture et sont rendues étanches d'une manière anti-déflagrante par une masse de scellement.

3. Détecteur de gaz photo-acoustique suivant la revendication 2, **caractérisé en ce que** le couvercle (9) de fermeture est constitué sur sa face intérieure en réflecteur (14) qui dévie le rayonnement réfléchi de la source (5) de lumière dans la cellule (13) de mesure et **en ce que** le filtre (15) optique à bande passante est relié à la pièce (1) formant capteur par une colle qui absorbe la lumière.

4. Détecteur de gaz photo-acoustique suivant l'une des revendications 1 à 3, **caractérisé en ce que** la membrane (2) perméable aux gaz est rectangulaire.

5. Détecteur de gaz photo-acoustique suivant l'une des revendications 1 à 4, **caractérisé en ce que** le filtre (15) optique à bande passante est rectangulaire.

6. Détecteur de gaz photo-acoustique suivant l'une des revendications 1 à 5, **caractérisé en ce que** la source (5) de lumière, la photodiode (6) et le microphone (4) sont montés sur une plaquette (3) unique à circuit imprimé et la plaquette (3) à circuit imprimé a des broches (7) d'ajustement à la pièce (1) formant capteur.

7. Détecteur de gaz photo-acoustique suivant l'une des revendications 1 à 6, **caractérisé en ce que** la pièce (1) formant capteur a des dimensions extérieures constantes et **en ce que** la cellule (13) cylindrique de mesure peut être allongée en fonction d'une plage de mesures souhaitée et d'une sensibilité de mesures souhaitée jusqu'au maximum au diamètre de la pièce (1) formant capteur.

8. Utilisation d'un détecteur de gaz photo-acoustique suivant l'une des revendications 1 à 7, **caractérisée en ce qu'**il est déterminé pour le détecteur de gaz ayant une cellule (13) de mesure de dimensions sélectionnées, des valeurs d'étalonnage qui sont mémorisées dans une EEPROM de l'électronique (8) d'exploitation et qui sont utilisées pour associer des signaux de tension à des concentrations de gaz.

9. Utilisation suivant la revendication 8, lorsque celle-ci se rapporte à la revendication 3, **caractérisée en ce que** le signal de fond, qui provient de la colle qui absorbe de la lumière, est exploité comme signal de contrôle du fonctionnement du microphone (4), de la source (5) de lumière et de la photodiode (6).

**Fig. 1**

**Fig. 2**

**Fig. 3**